# EUROPEAN PATENT SPECIFICATION

(11) **EP 0 466 743 B1**
(45) Date of publication and mention of the grant of the patent: **03.11.1993**
(21) Application number: 90905456.1
(22) Date of filing: 31.03.1990
(51) Int. Cl.: C08J 3/05, C09D 127/24, C08L 27/24

(54) **PROCESS FOR THE PREPARATION OF AN AQUEOUS, FINELY DIVIDED DISPERSION OF A CHLORINATED POLYOLEFIN, AND THE USE THEREOF IN AQUEOUS COATING COMPOSITIONS**
VERFAHREN ZUR HERSTELLUNG EINER WÄSSRIGEN, FEINTEILIGEN DISPERSION VON EINEM CHLORIERTEN POLYOLEFIN UND DEREN ANWENDUNG IN WÄSSRIGEN BESCHICHTUNGSZUSAMMENSETZUNGEN
PROCEDE DE PREPARATION D'UNE DISPERSION AQUEUSE FINEMENT DIVISEE DE POLYOLEFINE CHLOREE, ET SON UTILISATION DANS DES COMPOSITIONS AQUEUSES DE REVETEMENT

(30) Priority: 04.04.1989 DE 3910901
(43) Date of publication of application: 22.01.1992
(73) Proprietor: Schindler, Günther, D-47800 Krefeld (DE)
(72) Inventor: SCHINDLER, Günther, D-4150 Krefeld (DE); ESTERS, Rainer, D-5650 Solingen 1 (DE)
(74) Representative: Stark, Walter, Dr.-Ing.
(86) International application number: EP9000511
(87) International publication number: WO9012056

(56) References cited:
- EP-A- 0 238 327
- EP-A- 0 265 522
- Chemical Abstracts, vool. 112, no. 12, 19 March 1990, (Columbus, Ohio, US), see page 77, abstract 100326k & JP, 1223147 (Tsuruoka, Mitsuo et al) 1989
- Chemical Abszracts, vol. 112, no. 22, 28 May 1990, (Columbus Ohio, US), see page 121, abstract 200787e, & JP, 1256549 (Aizawa, Yukihiko et al) 1989
- Chemical Abstracts, vol. 111, no. 26, 25 December 1989, (Columbus, Ohio, US), see page 76, abstract 234674k
- Dialog Information Services, File 351, World Patent Index 81-90, Dialog accession no. 84-045049/08,Mitsubishi Petroch KK, JP 59004637,A, 840111, 8408 (Basic)
- Dialog Information Services, File 351, World Patent Index 81-90, Dialog Accession no. 83-60057K/25, Mitsubishi Petroch KK, JP 58080337, A, 830514, 8325 (Basic)

## Description

The invention relates to a coating composition which is suitable as a primer for painting plastic parts and which contains an aqueous, finely divided dispersion, prepared in a certain manner, of one or more chlorinated polyolefins and optionally other suitable resins.

From JP-A-59 004 637 an aqueous coating composition is known which is prepared by dispersing ethylene-vinylacetate copolymer, chlorinated propylene having a chlorine content of from 20 to 40 weight percent, tackifying resins and waxes having a melting point of 55°-115°C in water in the presence of a saponification product of soluble acrylic esters polymers as protective colloid agent.

JP-A-58 080 337 relates to a method for preparing an aqueous coating composition by extruding a mixture of chlorinated polypropylene having a chlorine content of from 20 to 40 weight percent and a tackifier which is typically a hydrogenated resin ester, having a softening point of from 70° to 150°C and an aqueous solution of a partly saponified polyvinyl alcohol.

In JP-A-59 152 963 an aqueous protective coating composition is described comprising an acrylic resin, an aqueous disperion of a chlorinated polyolefin and pigments.

US-A-2,653,919 relates to aqueous polyethylene dispersion prepared by subjecting the molten polymer in water to high shear rates. Suitable devices are colloid mills or homogenizer with a pressure casing. Soaps, for example alkali metal salts of stearic acid, palmitic acid or other long chain carboxylic acids, are present in amounts between 1 to 10 parts by weight per 100 parts of polymer as emulsifying agent.

The painting of the surface of plastic parts or mouldings made from plastics with solvent-borne paints is known in principle. Depending on the chemical nature of the polymer, it was necessary that both the solvent and the binder system were matched to the substrate in order to achieve adequate adhesion and resistance of the coating appropriate to the particular requirements of the specific case. In order to improve adhesion, so-called primers have hitherto been applied using solvent-based coating compositions. Solvent-based coating compositions have been undesired for some time for various reasons, inter alia due to environmental problems.

The object of the present invention is to provide an aqueous coating composition which is suitable as a primer for the coating of plastic mouldings and which adheres sufficiently well to the plastics which are customary for plastic parts, and a process for the preparation of an aqueous, finely divided dispersion of chlorinated polyolefins which is contained as a component in the aqueous primer composition.

This object is attained by an aqueous coating composition for plastic mouldings containing water, a film-forming binder system, pigments, finely divided dispersed chlorinated polyolefins having a degree of chlorination of 20 to 35 percent by weight based on the polymer and having a melting range of 80° to 100° and customary auxiliaries, characterized in that the film forming binder system contains at least a polyurethane resin selected from aliphatic polycarbonate diol urethanes, polyesterurethanes, palyetherurethanes , arcrylateurethanes or mixtures thereof, and the proportion of the chlorinated polyolefins is 3.5 to 12 percent by weight, based on the solids of the film forming binder as a separately prepared stable aqueous dispersion having a solids content of from 30 to 60 percent by weight based on the polyolefin dispersion and having a particle size from 0.01 µm to 0.1 µm and comprising an anionic emulsifier which can be distributed in water, but not swell with water and having an HLB-value between 11 and 12 in an amount of from 0.2 to 1 percent by weight based on chlorinated polyolefins.

The binder system of the aqueous coating compositions has to be matched to specific requirements and usually comprises a mixture of several binders. Suitable binders are commercially available aliphatic polycarbonate diol urethanes, polyesterurethanes, polyetherurethanes, acrylateurethanes. Preferably the amount of the urethane resin(s) in the binder system is from 50 to 100 percent by weight based on the total weight of the film forming binder system. The other resins which can be combined with the polyurethane resin are acrylate and/or methacrylate resins or other vinyl resins. Preferred other resins are modified (meth)acrylate-styrene copolymers, copolymers of methyl (meth)acrylate with styrene and or acrylonitrile.

The suitable polyurethane resins form stable aqueous dispersions without requirement of high amounts of emulsifier detergents. The NCO-containing polymers containing acid salt groups and having monovalent countar ions. Such resins are formed from organic polyisocyanates , especially diisocyanates and organic compounds containing active hydrogens for reaction with the organic polyisocyanate. The preferred compounds are polyols, especially blends containing at least a portion of higher molecular weight polymeric polyols to obtain a polymer having the desired flexible and elastomeric properties. Useful polyols are polyalkylene ether polyols as well as polyester polyols. The salt forming group may be either in the organic polyisocyanate or the polyhydroxyl component. Such polyurethane resins are disclosed for example in US-A-3,756,992, US-A-3,870,684 and 4,147,679.

Especially preferred is a binder system comprising 80 percent by weight of an aliphatic polycarbonte diol urethane and 20 percent by weight of a copolymer of acrylic acid and styrene, wherein the percentages are based on total solids resin weight of the film forming binder system.

The solution of the object of the invention also includes the preparation of a stable aqueous dispersion of chlorinated polyolefins having a low content of organic solvents. The invention provides a process for the preparation of a stable, aqueous, finely divided dispersion of one or more chlorinated polyolefines having a degree of chlorination of 20 to 35 percent by weight based on the polymer and having a melting range of from 80 to 100°C by mixing water with the polyolefin(s) in the presence of an anionic emulsifier, characterized by the steps:
(i) expulsion of the organic solvent from solutions or dispersions of one or more chlorinated polyolefins in aromatic solvents by heating to 90° to 120°C with stirring and melting the polymer composition,
(ii) neutralization of the acid content of the polymer melt using an organic amine,
(iii) incorporation and homogeneous distribution of from, 0.2 to 1 percent by weight, based on the polymer, of the emulsifier which can be distributed in water, but not swell with water an having a HLB value between 11 and 12 in the polymer melt at a temperature of about 100°C and,
(iv) introduction of hot water into the polymer melt with vigorous stirring until a finely divided dispersion of the chlorinated polyolefin(s) having a solids content of 30 to 60 percent by weight and a particle size from 0.01 to 0.1 µm has formed, and subsequent cooling of the dispersion to room temperature with stirring.

Preferably the total solids content is from 40 to 60 percent by weight based on the weight of dispersion.

Preferred chlorinated polyolefins are chlorinated polyethylene, chlorinated polypropylene, chlorinated polyethylene copolymer, and polypropylene copolymer. It is also possible to use mixtures of these chlorinated polyolefins. Chlorinated polypropylene, which is obtainable from Eastman Kodal or Toyo Kasai Kogyo as a solid or as a solution or dispersion in organic solvents, in particular aromatic solvents, is very particularly preferred. The degree of chlorination is preferably 20 to 30 percent by weight, based on the chlorinated polymer. Other suitable resins for mixing with the chlorinated polyolefins are commercially available hydrocarbon resins (coumarone-indene resins, terpene resins and petroleum resins) and polyester resins.

The coating composition according to the invention is suitable, in particular, for use as a primer on plastic mouldings from polypropylene, elastomer-modified polyolefins, polycarbonate, polyamide, acrylonitrile-butadienestyrene copolymer, polyurethane, polyvinyl chloride homopolymers or copolymers, polyethylene terephthalate, polybutylene terephthalate, polyoxymethylene or impact resistant polystyrene, polyphenylene oxide or glass fibre-reinforced polyester.

The particular advantage of the coating composition according to the invention is that it satisfies the demands regarding resistance in the area of the automotive industry. The coating compositions according to the invention have good adhesion to the plastic mouldings and adequate impact resistance and are resistant to petrol, lubricant oils and also some solvents. They do not swell on exposure to water after drying on and are also resistant to weathering if an appropriate binder system is selected.

The aqueous coating composition according to the invention may contain 2 to 15 parts by weight of lower glycols such as butylglycol or ester alcohols such as 2,2,4-trimethyl -1,3-pentandiol-monoisobutyrate or 1-methyl-2-pyrolidinone or mixtures thereof, 34 to 62 parts by weight of water, 12.5 to 25 parts by weight of binder mixture (solids), 15.5 to 37.5 parts by weight of pigment mixture, 0.2 to 1 part by weight of customary auxiliaries (wetting agents and antifoaming agents) and 8 to 16 parts by weight of chlorinated polyolefin(s) (solids).

The preferred coating composition according to the invention comprises
- 37.2 to 57.8: percent by weight water
- 2 to 14: percent by weight of lower glycol(s) or ester alcohol(s) of mixtures thereof
- 22.5 to 9: percent by weight of film forming binder system (solids)
- 25.5 to 15.5: percent by weight of pigment(s)
- 0.8 to 0.2: percent by weight of customary auxiliaries
- 12.0 to 3.5: percent by weight of chlorinated olefin(s) (solids)

All the percentages are based on total weight of the coating composition.

The coating compositions according to the invention can also be marketed as a concentrate with a solids content of 60 percent by weight and, for processing, are adjusted to the desired processing viscosity using water, it being possible for this viscosity to be between a dry solids content of 40 and 50 percent. The viscosity of the coating composition according to the invention at a dry solids content of 50 percent is 20 to 30 seconds, measured using a DIN 53211/4 viscosity cup at room temperature.

Suitable pigments for the binder compositions are aluminium silicate pigments, flake-forming pigments being preferred, TiO₂, carbon black, talc and highly dispersed amorphous silicon dioxide, silicone-modified silicas being particularly preferred. Silica pigments of this type are available under the name CAB-OSIL^{R} from Cabot and under the name Aerosil^{R} from Degussa. Titanium dioxide can be used as an opacifying pigment or barium sulphate or clay as extender. In order to produce grey or dark primer coatings, carbon black pigment can be used concomitantly. The content of pigment may be from about 38 to 75, preferably from 40 to 60 percent by weight on the total weight of binder and pigment.

Entirely surprisingly, good adhesion of the primer coating to most customary plastics for mouldings is achieved by also using an aqueous dispersion of the chlorinated polyolefin.

Stable aqueous dispersions of chlorinated polyolefins having low emulsifying contents and low content of organicsolvents were hitherto not available since the appropriate polymers are obtainable either as solids or dissolved or dispersed in organic solvents.

The specific procedure according to the invention, in which the organic solvents are first expelled with simultaneous melting of the chlorinated polyolefins, produces a composition which is viscous at 100 to 120°C and whose acid content is first neutralized with an organic amine, for example dimethylethanolamine or dimethylbutanolamine, triethylamine, or triethanolamine. In general, an amount of 0.5 to 1 percent by weight, based on the polymer melt, is sufficient for neutralization. The amount depends on the residual acid content of the polymer. The residual acid number should preferably be less than 1, determined by customary methods.

In order to render the chlorinated polymer dispersable in water, an anionic emulsifier having an HLB value between 11 and 12, preferably having an HLB value of 11.5, is incorporated into the melt. The amounts are 0.2 to 1 percent by weight, preferably 0.5 percent by weight based on the polymer melt. Examples of suitable anionic emulsifiers are isopropylaminealkylarylsulphonates. A particularly preferred emulsifier is isopropylamine dodecylbenzenesulphonate.

When selecting the anionic emulsifier, it should be especially ensured that it can be distributed in water, but does not swell with water.

In order to simplify distribution of the emulsifier and incorporation into the polymer melt, 3 to 6 percent by weight, based on the polymer melt, of lower glycols or polyglycols can also be used. Suitable glycols are ethyl glycol, butyl glycol, propyl glycol, butyl diglycol, diethylene and polyethylene glycols, and polybutylene and polypropylene diglycols.

To prepare the finely divided, aqueous dispersion of chlorinated polyolefin, the polymer melt prepared as described above is mixed with hot water with vigorous stirring and stirred vigorously until a finely divided, aqueous dispersion having a solids content of 30 to 60 percent by weight has formed. The stable aqueous dispersion has polymer particles with a size of from 0.01 µm to 0.1 µm. In spite of the low emulsifier content, the aqueous polymer dispersion is stable for an adequately long time.

The aqueous dispersion of the chlorinated polyolefin is then introduced according to the invention into aqueous coating compositions. It is preferred here to first form a pigment paste with some of the binder and the pigments by grinding and then to mix further binders into this paste. As the last component, the aqueous dispersion of the chlorinated polyolefin is mixed in, and the solids content adjusted to the desired processing viscosity using water. The aqueous coating compositions according to the invention can be applied by known processes by rolling, spraying or roller application and are dried in air or by oven drying at 80 to 100°C.

Preferred coating thicknesses are 20 to 150 µm, and coating thicknesses of 20 to 60 µm are very pariculary preferred.

The primer coatings according to the invention on plastic mouldings can subsequently be provided with customary top coats, single-coat or multi-coat painting being possible, depending on the visual effect desired.

The invention is described in greater detail with reference to an example.

### Preparation of the finely divided, aqueous dispersion of a chlorinated polypropylene

A commercially available solution/dispersion of chlorinated polypropylene having a degree of chlorination of 24 percent, based on the polymer, is raised to a solids content of 75 percent by adding further solid, chlorinated polypropylene with stirring. The solvent is expelled with warming and optionally with application of a vacuum at temperatures of somewhat above 100°C with melting of the polymer, so that a high viscosity polymer melt (750 g) is produced. The latter is neutralized using 0.5 percent by weight of dimethylethanolamine, and 0.5 percent by weight of isopropylaminedodecylbenzenesulphonate is subsequently incorporated into the polymer melt and distributed homogeneously with concomitant use of 5 percent by weight of butyl glycol. 0.8 litre of demineralized water is then slowly introduced into the mixer with vigorous stirring, and a finely divided, aqueous dispersion of the chlorinated polypropylene having a solids content of about 45 percent forms. The mean particle size of the poylymer particles is < 0.1 µm. The dispersion proved to be stable, even on standing at room temperature for a relatively long period. Neither separation nor creaming was detectable. In order to achieve the finely divided distribution of the polymer in water, the stirrer unit used is preferably a dissolver disk.

### Preparation of the aqueous coating composition

A pigment paste comprising the following components is prepared in a stirred ball mill:
- 3: parts by weight of butyl glycol
- 5: parts by weight of water
- 0.2: parts by weight of wetting agent (mixture of polyglycol esters, obtainable under the name METOLAT^{R} from Münzing Chemie GmbH)
- 0.1: part by weight of antifoaming agent (2,4,7,g-tetramethyl-5-decyne-4,7-diol)
- 0.5: part by weight of colloidal silica (obtainable under the name CAB-OSIL^{R} from Cabot)
- 5: parts by weight of talc
- 5: parts by weight of Al silicate pigment
- 5: parts by weight of Ti₂
- 0.2: parts by weight of commercially available carbon black pigment
- 20: parts by weight of anionically modified acrylate-styrene copolymer dispersion, solids content of 45 percent, obtainable under the name Neocryl^{R} from Polyvinylchemie

The components are ground in the stirred ball mill for from ten minutes to one hour until all the components have a particle size of less than 20 µm. the fineness is monitored and checked with the aid of a grindometer.

As further binders, 10 parts by weight of acrylate-styrene copolymer dispersion (dry solids content 35 percent, obtainable under the name Neocryl^{R} from Polyvinylchemie) and 10 parts by weight of aliphatic polycarbonate diol urethane (dry solids content 35 percent, obtainable under the name Neorez^{R} from Polyvinylchemie) are subsequently incorporated into the pigment paste. 40 parts by weight of the aqueous dispersion, prepared previously, of the chlorinated polypropylene having a dry solids content of 48 percent are subsequently mixed in with stirring.

After the coating composition has been adjusted to a spraying viscosity (20 to 30 seconds, measured using a DIN 4 viscosity cup at room temperature), the composition is sprayed onto mouldings made from fibre-reinforced polypropylene in a coating thickness of 50 µm (dry) and dried at 80 to 100°C in a circulation oven.

The coating exhibited good adhesion and impact resistance and could be painted without difficulties using customary coats.

Comparably good adhesion of the primer coating was obtained from mouldings made from polycarbonate, polyurethane and acrylonitrile-butadiene-styrene, in each case with fibre reinforcement or without fibre reinforcement.

## Claims

1. A process for the preparation of a stable, aqueous finely divided dispersion of one or more chlorinated polyolefins having a deyree of chlorination of 20 to 35 percent by weight based on the polymer and having a melting range from 80 to 100°C by mixing water with the polyolefin(s) in the presence of an anionic emulsifier,
**characterized by**
the steps:
(i) expulsion of the organic solvent from solutions or dispersions of one or more chlorinated polyolefins in aromatic solvants by heating to 90° to 120°C with stirring and melting the polymer composition,
(ii) neutralization of the acid content of the polymer melt using an organic amine,
(iii) incorporation and homogeneous distribution of from 0.2 to 1 percent by weight, based on the polymer. of the anionic emulsifier which can be distributed in water, but not swell with water and having an HBL value between 11 and 12 in the, polymer melt at a temperature of about 100°C, and
(iv) introduction of hot water into the polymer melt with viyorous stirring until a finely divided dispersion of the chlorinated polyolefin(s) having a solids content of 30 to 60 percent by weight and a particle size from 0.01 to 0.1 µm has formed, and subsequent cooling of the dispersion to room temperature with stirring.

2. The process according to claim 1,
**charactrized in**
that the chlorinated polyolefin used is chlorinated polyethylene, chlorinated polypropylene, chlorinated polyethylene copolymer, chlorinated Polypropylene copolymer or a mixture thereof.

3. The process according to claim 1 or 2,
**characterized in**
that 3 to 6 percent by weight, based on the chlorinated polyolefin, of butyl glycol, ethyl glycol, propyl glycol or butyl diglycol is also incorporated into the polymer melt during incorporation of the anionic emulsifier.

4. The process according to claim 1,
**characterized** **in**
that the anionic emulsifier used is an isopropylamine alkylarylsulphonate.

5. An aqueous coating composition for plastic mouldings, containing water, a film forming binder system, pigments, finely divided dispersed chlorinated polyolefins having a degree of chlorination of 20 to 35 percent by weight based on the polymer and having a melting range of 80° to 100°C and customary auxiliaries, **characterized in** that
the film forming binder system contains at least a polyurethane resin selected from aliphatic polycarbonate diol urethanes. polyesterurethanes, polyetherurethanes, acrylate urethanes or mixtures thereof and that the proportion of the chorinated polyolefins is 3.5 to 12 percent by weight, based on the solids of the film forming binder system as a separately prepared stable aqueous dispersion having a solids content of from 30 to 60 percent by weight based on the polyolefin dispersion and having a particle size from 0.01 µm to 0.1 µm and comprising an anionic emulsifier which can be distributed in water, but not swell with water and having a HLB-value between 11 and 12 in an amount of from 0.2 to 1 percent by weight based on chlorinated polyolefins.

6. The aqueous coating composition of claim 5,
**characterized in**
that the aqueous dispersion of the chlorinated polyolefins has been prepared according to the method of claims 1 to 4.

7. Aqueous coating composition according to claim 5,
**characterized in**
that chlorinated polyolefin is chlorinated polyethylene, chlorinated polypropylene, chlorinated polyethylene copolymer, chlorinated polypropylene copolymer or a mixture thereof.

8. Aqueous coating composition according to each of the preceding claims 5 to 7
**characterized in**
it contains
37.2 to 57.8 percent by weight water
2 to 15 percent by weight of lower glycol(s) or ester alcohol and mixtures thereof
22.5 to 9 percent by weight of film forming binder system (solids)
25.5 - 15.5 percent by weight of pigment(s)
12.0 - 3.5 percent by weight of chlorinated olefin(s) (solids)
15.4 - 16.0 percent by weight of customary auxiliaries
wherein all the percentages are based on total weight of the coating composition.

9. Use of the aqueous coating composition according to each of claims 5 to 8 as a primer on plastic mouldings made from polypropylene, elastomer-modified polyolefins, polycarbonate, polyamide, acrylonitrilebutadiene-styrene copolymer, polyurethane, polyvinyl chloride homopolymers or copolymers, polyethylene terephthalate, polybutylene terephthalate, polyoxymethylene, impact resistant polystyrene, polyphenylene oxide or glass fibre-reinforced polyester.

## Patentansprüche

1. Verfahren zum Herstellen einer stabilen wäßrigen feinteiligen Dispersion eines oder mehrerer chlorierter Polyolefine mit einem Chlorierungsgrad von 20 - 35 Gew.%, bezogen auf Polymer und einem Schmelzbereich von 80 - 100°C, durch Einbringen von Wasser in das (die) Polyolefin(e) in Gegenwart eines anionischen Emulgators, gekennzeichnet durch die Schritte:
(i) Abtreiben des organischen Lösungsmittels aus Lösungen oder Dispersionen eines oder mehrerer chlorierter Polyolefine in aromatischen Lösungsmitteln durch Erwärmen unter Rühren auf 90° bis 120° und Aufschmelzen der Polymermasse,
(ii) Neutralisieren des Säuregehalts der Polymerschmelze mit einem organischen Amin,
(iii) Einarbeiten und gleichmäßiges Verteilen von 0,2 bis 1 Gew.%, bezogen auf Polymer, des anionischen Emulgators, der im Wasser verteilt sein kann, aber im Wasser nicht schwillt, und der einen HLB-Wert zwischen 11 und 12 in der Polymerschmelze bei einer Temperatur von etwa 100°C aufweist und
(iv) Eintragen von heißem Wasser in die Polymerschmelze unter intensivem Rühren, bis eine feinteilige Dispersion des oder der chlorierten Polyolefine mit einem Feststoffgehalt von 30 - 60 Gew.% sowie einer Partikelgröße von 0,01 bis 0,1 µm ausgebildet ist und anschließendes Abkühlen der Dispersion auf Raumtemperatur unter Rühren.

2. Verfahren nach Anspruch 1, dadurch gekennzeichnet, daß man als chloriertes Polyolefin chloriertes Polyethylen, chloriertes Polypropylen, chloriertes Polyethylencopolymer, chloriertes Polypropylencopolymer oder eine Mischung derselben verwendet.

3. Verfahren nach Anspruch 1 oder 2, dadurch gekennzeichnet, daß man beim Einarbeiten des anionischen Emulgators 3 bis 6 Gew.% bezogen auf chloriertes Polyolefin, Butylglycol, Ethylglycol, Propylglycol oder Butyldiglycol in die Polymerschmelze mit einarbeitet.

4. Verfahren nach Anspruch 1, dadurch gekennzeichnet, daß man als anionischen Emulgator ein Isopropylaminalkylarylsulfonat verwendet.

5. Wäßrige Beschichtungszusammensetzung für Kunststofformteile enthaltend Wasser, ein filmbildendes Bindemittelsystem, Pigmente, feinteilige dispergierte chlorierte Polyolefine mit einem Chlorierungsgrad von 20 - 35 Gew.%, bezogen auf Polymer und einem Schmelzbereich von 80° - 100°C und übliche Hilfsstoffe, dadurch gekennzeichnet, daß das filmbildende Bindemittelsystem wenigstens ein Polyurethanharz aus aliphatischen Polycarbonatdiolurethanen, Polyesterurethanen, Polyätherurethanen, Acrylaturethanen oder Mischungen daraus enthält, und daß der Anteil der chlorierten Polyolefine 3,5 - 12 Gew.% beträgt, bezogen auf die Feststoffe des filmbildenden Bindemittelsystems, das als getrennt hergestellte stabile, wäßrige Dispersion einen Feststoffgehalt von 30 - 60 Gew.%, bezogen auf die Polyolefindispersion, und eine Partikelgröße von 0,01 bis 0,1 µm aufweist, sowie 0,2 - 1 Gew.%, bezogen auf die chlorierten Polyolefine eines anionischen Emulgators, der in Wasser verteilt sein kann, aber im Wasser nicht schwillt, und der einen HLB-Wert zwischen 11 und 12 besitzt, enthält.

6. Wäßrige Beschichtungszusammensetzung nach Anspruch 5, dadurch gekennzeichnet, daß die wäßrige Dispersion der chlorierten Polyolefine nach dem Verfahren der Ansprüche 1 - 4 hergestellt wurde.

7. Wäßrige Beschichtungszusammensetzung nach Anspruch 5, dadurch gekennzeichnet, daß das chlorierte Polyolefin chloriertes Polyethylen, chloriertes Polypropylen, chloriertes Polyethylencopolymer, chloriertes Polypropylencopolymer oder eine Mischung derselben ist.

8. Wäßrige Beschichtungszusammensetzung nach jedem der vorstehenden Ansprüche 5- 7, dadurch gekennzeichnet, daß sie enthält
37, 2 - 57,8 Gew.% Wasser
2 - 15 Gew.% niederes Glykol oder alkoholischen Estern und Mischungen davon
22,5 - 9 Gew.% filmbildenes Bindesystem (Feststoffe)
25,5 - 15,5 Gew.% Pigment(e)
12,0 - 3,5 Gew.% chlorierte(s) Polyolefin(e) (Feststoffe)
15,4 - 16,0 Gew.% üblichen Hilfsstoffe,
wobei die Prozentangaben auf das Gesamtgewicht der Beschichtungszusammensetzung bezogen sind.

9. Verwendung der wäßrigen Beschichtungszusammensetzung nach jedem der Ansprüche 5 bis 8 als Haftgrundierung auf Kunststofformteilen aus Polypropylen, elastomermodifizierten Polyolefinen, Polycarbonat, Polyamid, Acrylnitrilbutadienstyrolcopolymer, Polyurethan, Polyvinylchloridhomooder copolymeren, Polyethylenterephthalat, Polybutylenterephthalat, Polyoxymethylen, schlagzähem Polystyrol, Polyphenylenoxid, glasfaserverstärkte Polyester.

## Revendications

1. Procédé pour la préparation d'une dispersion aqueuse stable finement divisée d'une ou de plusieurs polyoléfines chlorées dont le taux de chloration, rapporté au polymère, est de 20 à 35% en poids, et dont la gamme des températures de fusion va de 80 à 100°C, par mélange d'eau avec la ou les polyoléfines en présence d'un émulsifiant anionique, caractérisé par les étapes suivantes :
(i) élimination du solvant organique de solutions ou de dispersions d'une ou de plusieurs polyoléfines chlorées dans des solvants aromatiques, par chauffage sous agitation jusqu'a 90 à 120°C et fusion de la masse de polymère,
(ii) neutralisation de l'acide contenu dans le polymère fondu au moyen d'une amine organique,
(iii) incorporation et répartition homogène de 0,2 à 1% en poids, rapporté au polymère, de l'émulsifiant anionique qui peut être réparti dans l'eau, mais qui ne gonfle pas dans l'eau, et qui présente une valeur HLB comprise entre 11 et 12 dans le polymère fondu à une température de 100°C environ, et :
(iv) introduction d'eau chaude dans le polymère fondu sous agitation intense, jusqu'à ce qu'il se soit formé une dispersion finement divisée de la ou des polyoléfines chlorées qui présente une teneur en solides de 30 à 60% en poids et une taille des particules de 0,01 à 0,1 µm, suivie par un refroidissement sous agitation de la dispersion jusqu'à la température ambiante.

2. Procédé selon la revendication 1, caractérisé par le fait que l'on utilise comme polyoléfine chlorée du polyéthylène chloré, du polypropylène chloré, un copolymère chloré de polyéthylène, un copolymère chloré de polypropylène ou un mélange de ceux-ci.

3. Procédé selon la revendication 1 ou 2, caractérisé par le fait que, pendant l'incorporation de l'émulsifiant anionique, on incorpore également au polymère fondu de 3 à 6% en poids, rapportés à la polyoléfine chlorée, de butylèneglycol, d'éthylène-glycol, de propylène-glycol ou de diéthylène-glycol de butyle.

4. Procédé selon la revendication 1, caractérisé par le fait que l'on utilise un sulfonate arylalcoylé d'isopropylamine comme émulsifiant anionique.

5. Composition aqueuse pour le revêtement de pièces moulées en matière plastique, contenant de l'eau, un système liant formant une pellicule, des pigments, des polyoléfines chlorées dispersées finement divisées qui présentent un taux de chloration rapporté au polymère de 20 à 35% en poids et dont la gamme des températures de fusion va de 80 à 100°C, et des adjuvants habituels, caractérisée par le fait que le système liant formant une pellicule contient au moins une résine poyluréthanne choisie parmi les uréthannes aliphatiques de poly(carbonate de dialcool), les polyesteruréthannes, les polyetheruréthannes, les uréthannes acryliques ou des mélanges de ceux-ci, et par le fait que la proportion des polyoléfines chlorées rapportée aux solides est de 3,5 à 12% en poids du système liant formant une pellicule, et qu'elles se présentent sous la forme d'une dispersion aqueuse stable préparée séparément qui présente une teneur en solides rapportée à la dispersion de polyoléfine de 30 à 60% en poids, qui présente une taille des particules de 0,01 à 0,1 µm, et qui comprend un émulsifiant anionique qui peut être réparti dans l'eau, mais qui ne gonfle pas dans l'eau, et qui présente une valeur HLB comprise entre 11 et 12, en une quantité rapportée aux polyoléfines chlorées de 0,2 à 1% en poids.

6. Composition aqueuse de revêtement selon la revendication 5, caractérisée par le fait que la dispersion aqueuse de polyoléfines chlorées a été préparée selon le procédé des revendications 1 à 4.

7. Composition aqueuse de revêtement selon la revendication 5, caractérisée par le fait que la polyoléfine chlorée est du polyéthylène chloré, du polypropylène chloré, un copolymère chloré de polyéthylène, un copolymère chloré de polypropylène ou un mélange de ceux-ci.

8. Composition aqueuse de revêtement selon chacune des revendications précédentes 5 à 7, caractérisée par le fait qu'elle contient :
37,2 à 57,8% en poids d'eau,
2 à 15% en poids de glycol(s) inférieur(s) ou d'esters alcooliques et de mélanges de ceux-ci,
22,5 à 9% en poids de système liant formant une pellicule (solides),
25,5 à 15,5% en poids de pigment(s),
12,0 à 3,5% en poids de polyoléfine(s) chlorée(s) (solides),
15,4 à 16,0% en poids d'adjuvants habituels,
tous les pourcentages étant rapportés au poids total de la composition de revêtement.

9. Utilisation de la composition aqueuse de revêtement selon chacune des revendications 5 à 8 comme couche de fond sur des pièces moulées en matière plastique en polypropylène, en polyoléfines modifiées par des élastomères, en polycarbonate, en polyamide, en poly(acrylonitrile/butadiène/styrène), en polyuréthanne, en homopolymères ou en copolymères de chlorure de polyvinyle, en poly(téréphtalate d'éthylène), en poly(téréphtalate de butylène), en poly(oxyméthylène), en polystyrène résistant aux chocs, en poly(oxyphénylene), ou en polyester renforcé par des fibres de verre.
